# EUROPÄISCHE PATENTSCHRIFT

(11) **EP 1 402 326 B1**
(45) Veröffentlichungstag und Bekanntmachung des Hinweises auf die Patenterteilung: **31.08.2005**
(21) Anmeldenummer: 02754249.7
(22) Anmeldetag: 21.06.2002
(51) Int. Cl.: G05B 19/418

(54) **VERFAHREN UND DATENVERARBEITUNGSEINRICHTUNG ZUR INBETRIEBSETZUNG VON MANUFACTURING EXECUTION SYSTEMS (MES) - KOMPONENTEN**
METHOD AND DEVICE FOR COMMISSIONING MANUFACTURING EXECUTION SYSTEMS (MES) COMPONENTS
PROCEDE ET DISPOSITIF DE TRAITEMENT DE DONNEES PERMETTANT LA MISE EN FONCTIONNEMENT DE COMPOSANTES DE SYSTEME D'EXECUTION DE PRODUCTION (MES)

(30) Priorität: 02.07.2001 DE 10131956
(43) Veröffentlichungstag der Anmeldung: 31.03.2004
(73) Patentinhaber: SIEMENS AKTIENGESELLSCHAFT, 80333 München (DE)
(72) Erfinder: HEIDEMANN, Lüder, 91058 Erlangen (DE); SCHEER, Jan, 90763 Fürth (DE)
(86) Internationale Anmeldenummer: PCT/DE2002/002285
(87) Internationale Veröffentlichungsnummer: WO 2003/005138

(56) Entgegenhaltungen:
- WEYGANDT S: "Getting the MES model -- methods for system analysis" ISA TRANSACTIONS, INSTRUMENT SOCIETY OF AMERICA. PITTSBURGH, US, Bd. 35, Nr. 2, 1996, Seiten 95-103, XP004020113 ISSN: 0019-0578

## Beschreibung

Die Erfindung bezieht sich auf ein Verfahren und eine Datenverarbeitungseinrichtung zur Inbetriebsetzung von MES-Komponenten, insbesondere Maintenance Management-Komponenten.

Aus "Software für die Automatisierung - Transparenz über die Abläufe schaffen", Artikel von Dirk Kozian in Elektronik für die Automatisierung 11, 17.11.1999 ist bekannt, für die Automatisierung von Produktions- bzw. Fertigungsabläufen so genannte Manufacturing Execution Systems (MES) einzusetzen. Diese Systeme integrieren die Automatisierungsebene (Controls) mit den ERP-Systemen (ERP: Enterprise Resource Planning) der Unternehmensleitebene. Manufacturing Execution Systems sind Systeme, die z.B. Informationen zur Optimierung von Produktionsabläufen bereitstellen. Zum einen müssen die Manufacturing Execution Systems die groben Planungsdaten der ERP-Systeme um anlagenspezifische und aktuelle Feinplanungsdaten ergänzen und diese entsprechend an die unterlagerte Automatisierungsebene weiterleiten, zum anderen haben sie die Aufgabe, aus der Automatisierungsebene produktionsrelevante Informationen zu übernehmen, diese aufzubereiten und an die Unternehmensleitebene weiterzumelden. MES-Systeme erfüllen somit die Aufgabe einer vertikalen Integration zwischen der Unternehmensleitebene und der Automatisierungsebene. Typische Einzelaufgaben von MES-Systemen sind Enterprise Asset Management, Maintenance Management, Information Management, Scheduling, Dispatching und Trace & Track. Diese Aufgaben werden jeweils von MES-Komponenten ausgeführt. Damit eine MES-Komponente arbeiten kann, benötigt sie Informationen über andere Komponenten oder eventuell auch über die gesamte Struktur der Anlage. Heutzutage werden diese Informationen im Allgemeinen manuell durch den Systemintegrator oder den Inbetriebsetzer in den MES-Komponenten eingegeben. Die Informationen über die Anlagenstruktur sind üblicherweise in Engineering-Dokumenten (z.B. P&ID, Pipe & Instrument Diagram oder Messstelllisten) enthalten.
Aus JP 0144453 ist es bekannt, aus den graphischen Informationen von P&ID-Diagrammen eine Liste von Ausstattungsinformation für Anlagen zu generieren.

Aus US 6,141,647 sind ein System und ein Verfahren bekannt zum Integrieren einer Geschäfts-, d.h. betriebswirtschaftlichen Umgebung, einer Automatisierungsumgebung und einer Laborumgebung.

In DE 199 48 028 A1 werden ein Verfahren und ein System zum Optimieren des Anforderungsschickens in Workflow Management Systemen beschrieben.

Aufgabe der Erfindung ist es daher, ein Verfahren und ein System zur automatischen Inbetriebsetzung von MES-Komponenten bereitzustellen, wobei die MES-Komponenten mit Informationen über die hierarchische Anlagenstruktur geladen werden.

Die Erfinder sind dabei von der Kenntnis ausgegangen, dass sich alle für den Betrieb von MES-Komponenten benötigten Informationen in den Engineering-Dokumenten befinden und dass sich aus diesen Dokumenten die Hierarchie der Anlagenstruktur ableiten lässt. Weiterhin sind die Erfinder von der Erkenntnis ausgegangen, dass eine hierarchische Anlagenstruktur, die explizit Teilanlagen bzw. Teilkomponenten ausweist, eine optimale informationstechnische Basis für die Inbetriebsetzung und für den Betrieb von MES-Komponenten darstellt.

Gemäß der Erfindung wird die oben genannte Aufgabe für ein Verfahren zur Inbetriebsetzung von MES-Komponenten, insbesondere Maintenance Management-Komponenten, durch die Abfolge folgender Schritte gelöst:
a) Extraktion von relevanten Daten aus Engineering-Dokumenten,
b) Zusammenfassung der relevanten Daten zu mindestens einem Dokument bzw. einer Datei,
c) Abbildung der Informationen dieser Dokumente bzw. Dateien auf Grundlage einer vorgebbaren Anlagenkennzeichnungsstruktur in eine hierarchische Anlagenstruktur,
d) Laden dieser hierarchischen Anlagenstruktur in die jeweilige MES-Komponente.

Durch dieses beschriebene Verfahren wird der Systemintegrator bzw. der Inbetriebsetzer einer Anlage entlastet. Eine MES-Komponente, z.B. eine Maintenance-Komponente, die auf einer Anlage in Betrieb gesetzt werden soll, ist üblicherweise komplett leer. Um z.B. eine Maintenance-Komponente soweit operabel zu machen, dass sie für den Kunden Nutzen bringt, müssen sämtliche Anlagenobjekte, die es tatsächlich gibt (eine Anlage kann ca. 10.000 bzw. 100.000 und mehr Anlagenobjekte haben), angelegt, d.h. instanziiert werden. Wenn nun diese Instanziierung manuell erfolgen soll, dann ist das zum einen ein sehr zeitaufwändiges Verfahren und zum anderen ist die Gefahr manueller Aufnahmefehler sehr groß. Durch das erfindungsgemäße Verfahren erfolgt nun das Abfüllen von MES-Komponenten automatisch, wodurch die Qualität dieses Vorgangs erhöht wird. Wenn nun die Engineering-Dokumente, aus denen die relevanten Daten extrahiert werden, auch Informationen bezüglich der Instandhaltung der Anlage (z.B. in welchen Zeitzyklen muss ein Motor gewartet und abgeschmiert werden?) enthalten, dann ist eine Maintenance-Komponente, für die diese Instandhaltungsinformationen sehr wichtig sind, sofort einsatzbereit.

Eine erste Ausgestaltung der vorliegenden Erfindung liegt darin, dass Verweise auf die Engineering-Dokumente und/oder Inhalte der Engineering-Dokumente mit in die hierarchische Anlagenstruktur abgebildet werden und auf die MES-Komponente geladen werden. Dadurch, dass Verweise auf die ursprünglichen Dokumente bzw. auch Inhalte der ursprünglichen Quell-Dokumente mit auf die MES-Komponente geladen werden, ist es möglich, auch in diesen Quell-Dokumenten zu navigieren. Dadurch, dass diese Ursprungsdokumente automatisch mit eingebunden werden, wird auch der Bediener einer MES-Komponente unterstützt, da er einen zielgerichteten Zugriff auf die Ursprungsdokumentation hat. Der zielgerichtete Zugriff auf die Ursprungsdokumentation ist aber auch für den Instandhaltungsplaner, den Instandhaltungsdurchführer, den Werksleiter oder einen Ingenieur, der eine Anlage umbauen muss, von Vorteil, da quasi online der Zugriff auf diese Ursprungsdokumentation vorhanden ist.

Eine weitere vorteilhafte Ausgestaltung der Erfindung liegt darin, dass die relevanten Daten und/oder Teile der relevanten Daten auf Attribute der Objekte in der hierarchischen Anlagenstruktur abgebildet werden. Dadurch wird die Flexibilität für den Inbetriebsetzer erhöht.

Eine weitere vorteilhafte Ausgestaltung der Erfindung liegt darin, dass die Vorschrift für die Abbildung der Informationen parametrierbar ist. Die Parametriermöglichkeit der Abbildungsvorschrift ist von doppeltem Vorteil, zum einen wird aus der linearen Liste des Importdokumentes in Abhängigkeit von einem Anlagenkennzeichnungssystem (für Anlagenkennzeichnungssysteme gibt es verschiedene Standards, z.B. für den Kraftwerksbereich den KKS-Standard) abhängig vom zugrunde gelegten Anlagenkennzeichnungssystem eine hierarchische Anlagenstruktur generiert, zum anderen muss festgelegt sein, wie ein Anlagenobjekt aus dem Importdokument auf einen Objekttyp in der MES-Komponente abgebildet wird (z.B. muss festgelegt sein, welches Attribut aus dem Importdokument auf ein entsprechendes Objekt oder auf entsprechende Attribute in der MES-Komponente abgebildet wird). Wenn diese Mapping-Informationen parametrierbar sind und ohne großen Programmieraufwand geändert werden können, vielleicht auch graphisch geändert werden können, dann wird dadurch die Flexibilität und der Komfort bei der Inbetriebsetzung erhöht.

Eine weitere vorteilhafte Ausgestaltung für eine erfindungsgemäße Datenverarbeitungseinrichtung liegt darin, dass eine erste Einrichtung aus vorgebbaren Engineering-Dokumenten relevante Daten extrahiert, eine zweite Einrichtung die relevanten Daten zusammenfasst und dass eine dritte Einrichtung diese zusammengefassten Daten auf Grundlage einer vorgebbaren Anlagenkennzeichnungsstruktur in eine hierarchische Anlagenstruktur abbildet, wobei diese hierarchische Anlagenstruktur in die MES-Komponente durch eine Ladeeinrichtung geladen wird. Dadurch erfolgt das Laden von MES-Komponenten nicht mehr handish, sondern automatisch. Dadurch wird einerseits die Effizienz des Inbetriebsetzungsvorgangs erhöht und andererseits wird die Fehleranfälligkeit bei der Dateneingabe herabgesetzt.

Eine weitere vorteilhafte Ausgestaltung der Erfindung ist dadurch gegeben, dass durch die dritte Einrichtung die Engineering-Dokumente und/oder Verweise auf die Engineering-Dokumente in die hierarchische Anlagenstruktur abgebildet werden und in die MES-Komponente geladen werden. Dadurch, dass die Ursprungsdokumente automatisch mit eingebunden werden, ist ein zielgerichteter und konsistenter Zugriff auf diese Dokumentation möglich. Das Qualitätsmerkmal "Information at your finger tips" wird durch diese Ausgestaltung unterstützt. Dies ist von Vorteil für den Systemintegrator, den Instandhaltungsplaner, den Instandhaltungsdurchführer oder einen Ingenieur, der die Anlage umbauen muss.

Eine weitere vorteilhafte Ausgestaltung der vorliegenden Erfindung liegt darin, dass durch die dritte Einrichtung die relevanten Daten und/oder Teile der relevanten Daten auf Attribute der Objekte in der hierarchischen Anlagenstruktur 4abgebildet werden. Programmiersprachliche bzw. informationstechnische Objekte enthalten neben Methoden u.a. als wichtiges Bestandteil auch Attribute, durch die die Objekte näher gekennzeichnet und beschrieben werden. Durch die Abbildung von relevanten Anlagendaten oder Teilen davon auf diese Attribute, werden die Objekte für einen Benutzer realitätsnäher. D.h. die Repräsentation von konkreten Anlagenkomponenten durch informationstechnische Objekte wird dadurch transparenter und verständlicher.

Eine weitere vorteilhafte Ausgestaltung der vorliegenden Erfindung liegt darin, dass eine vierte Einrichtung vorhanden ist, über die die Anlagenkennzeichnungsstruktur definiert wird und/oder die Abbildung von Teilen der relevanten Daten und/oder die Abbildung der relevanten Daten auf Attribute der Objekte in der Anlagenstruktur definiert und vorgenommen wird. Dadurch kann die zugrundeliegende Anlagenkennzeichnungsstruktur sehr leicht geändert werden und weiterhin ermöglicht die Abbildung von relevanten Daten bzw. die Abbildung von Teilen von relevanten Daten auf Attribute der Objekte die Flexibilität für den Bediener und dadurch, dass die Abbildungsvorschrift in der Anlagenstruktur definiert wird, wird ein komfortables Handling dieser Abbildungsvorschrift für den Bediener erreicht.

Eine weitere vorteilhafte Ausgestaltung der Erfindung liegt darin, dass die Ladeeinrichtung in die dritte Einrichtung integriert ist. Dadurch wird eine kompakte Realisierung des Systems ermöglicht.

Eine weitere vorteilhafte Ausgestaltung der Erfindung liegt darin, dass die erste Einrichtung und die zweite Einrichtung durch eine einzige Einrichtung realisiert sind. Auch dadurch wird die kompakte Realisierung des Systems ermöglicht bzw. verbessert.

Eine weitere vorteilhafte Ausgestaltung der vorliegenden Erfindung liegt darin, dass die erste Einrichtung, die zweite Einrichtung und die dritte Einrichtung durch eine einzige Einrichtung realisiert sind. Auch dadurch wird die kompakte Realisierung des Systems ermöglicht.

Eine weitere vorteilhafte Ausgestaltung der vorliegenden Erfindung liegt darin, dass die dritte Einrichtung in die zweite Einrichtung und/oder die erste Einrichtung integriert ist. Auch dadurch wird die kompakte Realisierung des Systems ermöglicht
Eine weitere vorteilhafte Ausgestaltung der vorliegenden Erfindung liegt darin, dass die vierte Einrichtung in die dritte Einrichtung integriert ist.

Eine weitere vorteilhafte Ausgestaltung der vorliegenden Erfindung liegt darin, dass die Abbildungsvorschrift für die Abbildung der relevanten Daten und/oder die Abbildung von Teilen der relevanten Daten auf Attribute der Objekte der hierarchischen Anlagenstruktur parametrierbar ist. Dadurch wird die Flexibilität für den Bediener erhöht, und insbesondere ist das vorhandene System sehr leicht für unterschiedliche Anlagen oder Anlagentypen einsetzbar bzw. umrüstbar.

Eine weitere vorteilhafte Ausgestaltung der vorliegenden Erfindung liegt darin, dass das erfindungsgemäße Verfahren durch ein Computerprogramm implementiert ist. Dadurch können eventuelle Modifizierungen bzw. Anpassungen leicht durchgeführt werden.

Eine weitere vorteilhafte Ausgestaltung der vorliegenden Erfindung liegt darin, dass das Computerprogramm für das erfindungsgemäße Verfahren auf einem Datenträger gespeichert ist. Dadurch ist das Verfahren bezüglich der Logistik und Verteilung leicht handhabbar.

Eine weitere vorteilhafte Ausgestaltung der vorliegenden Erfindung liegt darin, dass das Computerprogramm für das erfindungsgemäße Verfahren auf einer Datenverarbeitungseinrichtung installiert ist. Dadurch wird die Performance erhöht.

Ein Ausführungsbeispiel der Erfindung, dem auch weitere Vorteile zu entnehmen sind, ist in der Zeichnung dargestellt und wird im folgenden erläutert.

Dabei zeigen:
- FIG 1: in einer Übersichtsdarstellung die "Unternehmenspyramide" mit drei Steuerungsebenen,
- FIG 2: in einer Übersichtsdarstellung den Aufbau des erfindungsgemäßen Systems,
- FIG 3: einen beispielhaften Aufbau einer hierarchischen Anlagenstruktur,
- FIG 4: ein grobes Ablaufdiagramm für die Erstellung der hierarchischen Anlagenstruktur,
- FIG 5: ein grobes Ablaufdiagramm für das Laden der hierarchischen Anlagenstruktur auf die MES-Komponente.

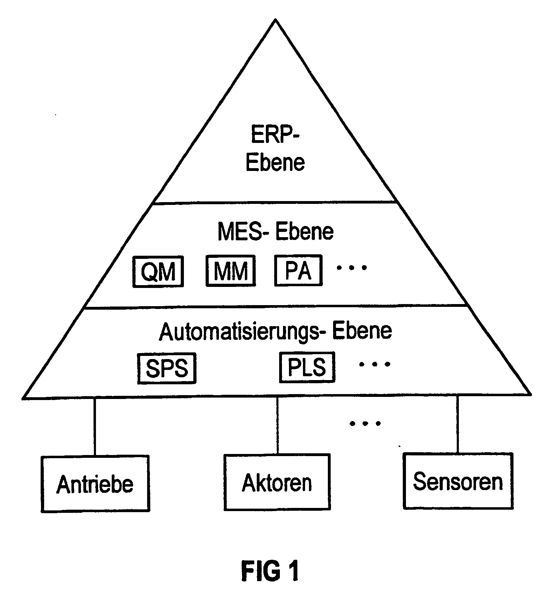

Die Darstellung gemäß FIG 1 zeigt in einer Übersichtsdarstellung die drei Steuerungsebenen, wie sie üblicherweise in einem produzierenden bzw. fertigenden Unternehmen zu finden sind. Durch die Pyramidenform wird ausgedrückt, dass nach oben hin eine Verdichtung der Informationen stattfindet. Die oberste Ebene ist die ERP-Ebene (Enterprise Resource Planning). Auf dieser Unternehmensleitebene werden üblicherweise die betriebswirtschaftlichen und vertrieblichen Aufgaben in einem Unternehmen durchgeführt (z.B. Finanzwesen, Vertriebswesen, Personalwesen, Berichterstattung). Aber auch produktionsanlagenübergreifende logistische Aufgaben (z.B. Auftrags- und Materialverwaltung) werden auf dieser Ebene durchgeführt. Das System SAP R/3 ist ein ERP-System, das auf der Unternehmensleitebene sehr häufig verwendet wird.

Die unterste Ebene der Pyramide ist die Automatisierungs-Ebene (Controls). Auf dieser Ebene kommen üblicherweise speicherprogrammierbare Steuerungen (SPS) in Verbindung mit Visualisierungs- und Prozessleitsystemen (PLS) zum Einsatz. Die Antriebe, Aktoren und Sensoren der Produktions- und/oder Fertigungseinrichtungen stehen direkt mit den Systemen dieser Ebene in Verbindung.
Das Verbindungsglied zwischen der ERP-Ebene und der Automatisierungs-Ebene wird durch die MES-Ebene gebildet. Die Applikationen der MES-Ebene sorgen somit für eine vertikale Integration zwischen der ERP-Ebene und der Automatisierungs-Ebene. Die MES-Applikationen müssen einerseits die Grobplanungen der ERP-Systeme um produktionsanlagenspezifische Feinplanungen ergänzen und an die Systeme der Automatisierungs-Ebene weiterleiten, andererseits ist es Aufgabe der MES-Applikationen produktionsrelevante Daten der Automatisierungs-Ebene aufzunehmen, aufzubereiten und an die ERP-Ebene (Unternehmensleitebene) weiterzuleiten.

Typische MES-Applikationen sind u.a. Quality Management (QM), Maintenance Management (MM), Performance Analysis (PA), Process Management, Labor Management, Asset Management. Durch jeweils drei Punkte wird in FIG 1 ausgedrückt, dass sich auf einer Ebene weitere Elemente (Applikationen, Systeme etc.) befinden können.

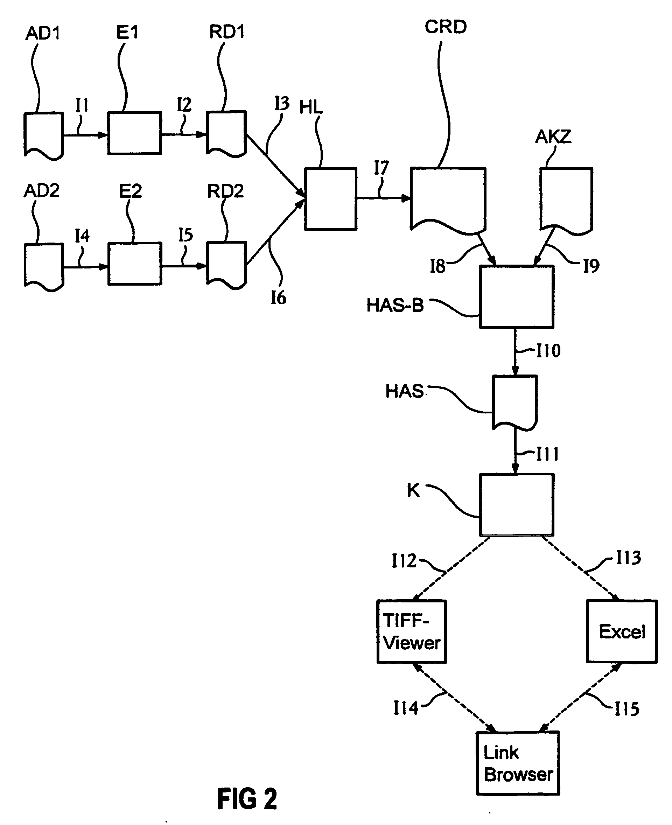

Die Darstellung gemäß FIG 2 zeigt in einer Übersichtsdarstellung den Aufbau des erfindungsgemäßen Systems. Ausgangspunkt sind die Engineering- bzw. Anlagendokumente AD1, AD2. Diese Engineeringdokumente können in unterschiedlichen Formaten oder Formen vorliegen. Sie können Textdokumente, Graphikdokumente oder auch gemischte Dokumente sein. Typische Engineeringdokumente zur Anlagenerstellung sind z.B. die Pipe & Instrument-Diagrams oder auch Messstellenlisten. Aus diesen Dokumenten werden über Extraktoren E1, E2 die relevanten Daten RD1, RD2 extrahiert und in Listen abgespeichert. Da die Anlagendokumente in unterschiedlichen Typen oder Formaten vorliegen können, können auch die Mittel zum Extrahieren E1, E2 separat ausgebildet sein, d.h. je nach Typ des Dokumentes, oder es kann auch ein Extraktor E1, E2 existieren, der für unterschiedliche Typen von Anlagendokumenten die relevanten Daten extrahieren kann. Es ist vorstellbar, dass die Extraktoren so ausgebildet sind, dass sie automatisch erkennen, welchen Typ eines Dokumentes sie gerade bearbeiten.
Relevante Daten sind z.B. Informationen, wie eine Anlage aufgebaut ist, d.h. aus welchen Teilanlagen eine Anlage existiert oder aus welchen Teilkomponenten eine Anlage sich zusammensetzt, usw. Die relevanten Daten RD1 und RD2 werden über einen Hyperlinker HL zu einer gemeinsamen Liste CRD zusammengefasst. Es ist vorteilhaft XML (eXtensible Markup Language) für das Format der Listen der relevanten Daten RD1, RD2 und für das Format der gemeinsamen Liste CRD zu verwenden. XML ist eine Metasprache, in der neue Elemente jederzeit definierbar sind. Des Weiteren kann XML über dieselben Kanäle wie HTML (Hyper Text Markup Language) übertragen werden und außerdem entstehen immer mehr XML-basierte Standards wie z.B. SOAP (Simple Object Access Protocol). Für die Listen können aber auch andere Formate verwendet werden, wie z.B. ASCII oder HTML.

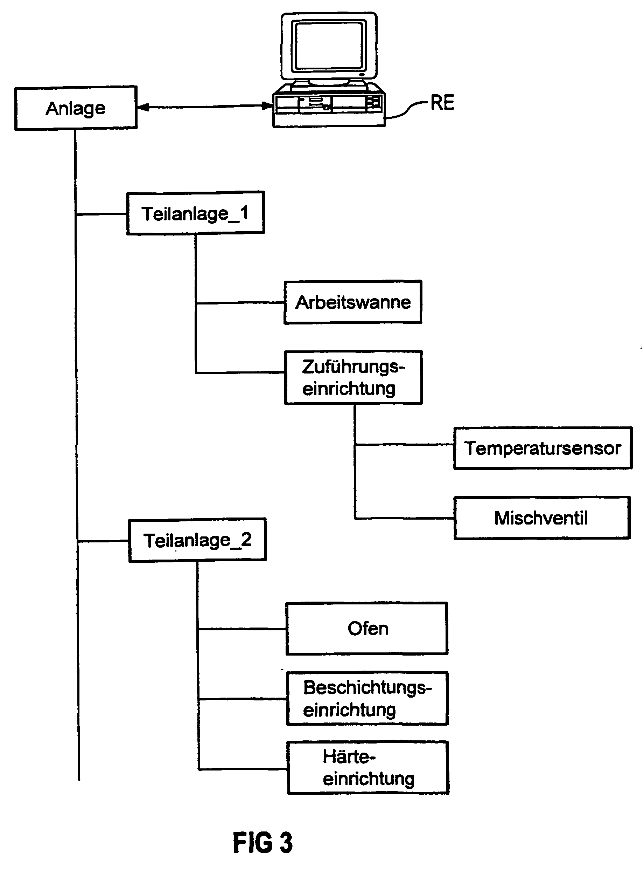

In der Abbildung nach FIG 2 repräsentieren die durchgezogenen Pfeile I1 bis I11 Informations- bzw. Datenflüsse. Der Informationsfluss I1 vom Anlagendokument AD1 zum Extraktor E1 stellt dar, dass das Anlagendokument Input für den Extraktor E1 ist. Der Pfeil I2 vom Extraktor E1 ausgehend und auf die relevanten RD1 weisend, stellt dar, dass die relevanten Daten RD1 Output des Extraktors E1 sind. Die zusammengefassten relevanten Daten CRD und die Anlagenkennzeichnungsstruktur AKZ sind Input für den HAS-Builder HAS-B (HAS steht für hierarchische Anlagenstruktur). Die Pfeile I8 bzw. I9 stellen diese Inputbeziehung zum HAS-Builder dar. Im HAS-Builder HAS-B wird aus der CRD-Liste in Abhängigkeit vom zugrunde gelegten AKZ (Anlagenkennzeichnungsstruktur) eine hierarchische Anlagenstruktur HAS generiert. Diese hierarchische Anlagenstruktur wird üblicherweise als Baumstruktur dargestellt mit Anlage, Teilanlagen, Teilkomponenten, usw. (siehe FIG 3). Durch den Pfeil I10 ist angedeutet, dass die hierarchische Anlagenstruktur HAS Output des HAS-Builders ist und durch den Informationspfeil I11 wird dargestellt, dass die hierarchische Anlagenstruktur Input für die MES-Komponente K ist. Die hierarchische Anlagenstruktur HAS kann durch eine separate Ladeeinrichtung auf die MES-Komponente K geladen werden, es ist aber auch vorstellbar, dass die Ladeeinrichtung Teil des HAS-Builders ist und somit nicht als separate Einrichtung ausgebildet ist. Weiterhin ist es auch vorstellbar, dass der Hyperlinker HL in den oder in einen Extraktor integriert ist. Dies ist insbesondere dann sinnvoll, wenn ein Extraktor mehrere Typen von Dokumenten bearbeiten kann.

Die Informationen über die Anlagenkennzeichnungsstruktur AKZ können fest verdrahtet dem HAS-Builder HAS-B mitgeteilt werden, es kann aber auch eine weitere Einrichtung vorgesehen sein, über die die Anlagenkennzeichnungsstruktur definiert wird. Somit können die Informationen über die Anlagenkennzeichnungsstruktur parametriert werden und sehr flexibel eingebracht werden. Es ist auch vorstellbar, dass z.B. über diese weitere Einrichtung oder über den HAS-Builder auch die Abbildungsvorschrift, wie die Abbildung der relevanten Daten oder Teile davon auf Attribute der Objekte in der Anlagenstruktur definiert wird. Auch dadurch wird die Flexibilität z.B. für den Bediener oder den Systemintegrator erhöht. Die Flexibilität wird weiterhin dadurch erhöht, dass auch Verweise auf die Engineeringdokumente und/oder Inhalte der Engineeringdokumente mit in die hierarchische Anlagenstruktur abgebildet und auf die entsprechende MES-Komponente geladen werden. In FIG 2 ist dies dargestellt durch die gestrichelten Pfeile I12 und I13. I12 verweist auf einen Tiff-Viewer, damit können Tiff-Dokumente angesehen werden. I13 verweist auf Excel-Tabellen, um auch den Zugriff auf diese Excel-Tabellen zu gewährleisten. Um ein komfortables Navigieren in diesen Dokumenten unmittelbar aus der MES-Komponente heraus zu gewährleisten, können, wie in FIG 2 dargestellt, durch die Pfeile I14 und I15 die Dokumente über einen Link Browser betrachtet werden. Damit ist ein sehr einfaches und komfortables Navigieren und Browsen in unterschiedlichsten Dokumenten möglich, egal ob in Text- oder in Grafikdokumenten.

Das erfindungsgemäß beschriebene Verfahren oder System ist besonders für solche MES-Komponenten geeignet, die für ihren Betrieb einen Gesamtüberblick über eine Anlage benötigen. Das Verfahren oder das System eignet sich aber auch für die rasche Inbetriebsetzung von MES-Komponenten, die nur Teilinformationen von Anlagen für ihren Betrieb benötigen.

Die Darstellung gemäß FIG 3 zeigt eine hierarchische Anlagenstruktur (HAS; FIG 2) als Baumdiagramm. Die Informationen, die nötig sind, um eine solche hierarchische Anlagenstruktur zu erstellen oder zu generieren, wurden aus den Engineering- bzw. Anlagendokumenten (AD1, AD2; FIG 2) gewonnen. Diese hierarchische Anlagenstruktur wird auf die MES-Komponenten (K; FIG 2) geladen, damit die MES-Komponenten betriebsbereit werden.

In FIG 3 ist exemplarisch und übersichtsmäßig eine Anlage dargestellt, die aus zwei Teilanlagen, Teilanlage_1 und Teilanlage_2, besteht, wobei die Teilanlage_1 eine Arbeitswanne und eine Zuführeinrichtung aufweist. Die Zuführeinrichtung besteht weiterhin aus den zwei Unterkomponenten Temperatursensor und Mischventil. Es ist angedeutet, dass die Teilanlage_2 aus drei weiteren Unterkomponenten besteht: einem Ofen, einer Beschichtungseinrichtung und einer Härteeinrichtung. Die gesamte Anlage kann, wie durch die drei Punkte am linken unteren Bildrand angedeutet, weitere Teilanlagen beinhalten.

Ein Anlagenbaum, wie er in FIG 3 exemplarisch dargestellt ist, wird durch die Liste der zusammengefassten relevanten Daten (CRD; FIG 2) repräsentiert. Die Objekte der CRD-Liste repräsentieren die Elemente und die Struktur der zugrundeliegenden Anlage. Die Objekte enthalten u.a. üblicherweise Methoden und Attribute, mit denen ihre Eigenschaften und ihr Verhalten definiert werden.

Im oberen Teil von FIG 3 ist dargestellt, dass die Anlage mit einer Rechnereinrichtung RE bidirektional (dargestellt durch einen bidirektionalen horizontalen Pfeil) verbunden ist. Die Rechnereinrichtung enthält üblicherweise eine Anzeigevorrichtung (z.B. einen oder mehrere Monitore) und Bedienelemente (Tastatur, Maus etc.). Auf der Rechnereinrichtung RE können u.a. Systeme zum Bedienen und Beobachten, Systeme zum Engineering oder MES-Applikationen ablaufen.

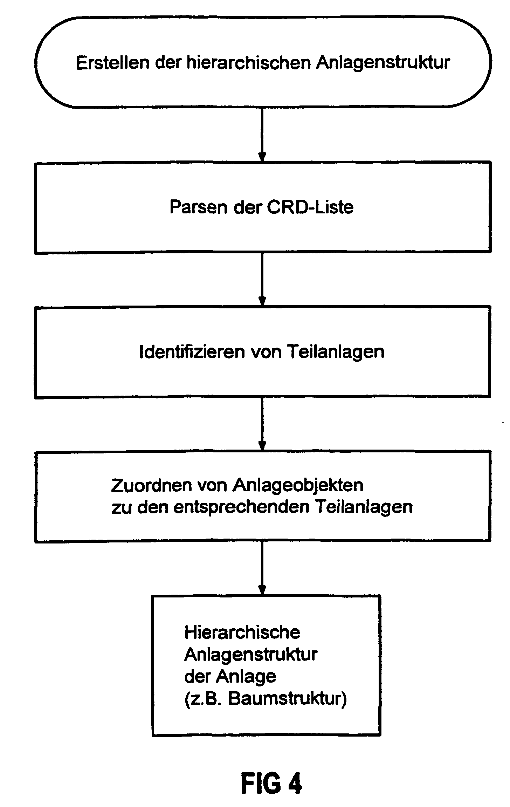

Die Darstellung gemäß FIG 4 zeigt in einem groben Ablaufdiagramm, wie die hierarchische Anlagenstruktur (HAS; FIG 2) der Anlage generiert wird. Ausgangspunkt für die Erstellung der hierarchischen Anlagenstruktur sind die Liste der zusammengefassten relevanten Daten (CRD; FIG 2) und die der Anlage zugrunde gelegte Anlagenkennzeichnungsstruktur (AKZ; FIG 2). Die CRD-Liste enthält alle aus den Engineering- bzw. Anlagendokumenten (AD1, AD2; FIG 2) relevanten Daten. Üblicherweise werden für die CRD-Liste die relevanten Daten über einen Hyperlinker (HL; FIG 2) zusammengefasst, da die relevanten Daten aus unterschiedlichen Typen von Dokumenten gewonnen werden können, z.B. aus Pdf-Dokumenten oder aus Graphik-Dokumenten. Die Anlagenkennzeichnungsstruktur (AKZ; FIG 2) legt fest, wie die einzelnen Elemente der CRD-Liste zu interpretieren sind. Für die Anlagenkennzeichen gibt es verschiedene Standards, so z.B. für den Kraftwerksbereich den KKS-Standard, für Fertigungsanlagen gibt es DIN-Normen.

Die vorliegende CRD-Liste wird Schritt für Schritt durchgegangen (Parsen der CRD-Liste) und anhand der einzelnen Anlagenkennzeichen der einzelnen Listenelemente ist erkennbar, ob Teilanlagen, Teilkomponenten oder andere Anlagenobjekte vorhanden sind. Die gefundenen Anlagenobjekte werden dann den entsprechenden Teilkomponenten bzw. Teilanlagen zugeordnet.

Auf diese Weise wird systematisch eine hierarchische Anlagenstruktur, üblicherweise in einer Baumstruktur, erstellt. Wenn die jeweils zugrunde gelegte Anlagenkennzeichnungsstruktur (AKZ; FIG 2) als frei vergebbarer Parameter dem Algorithmus zugeführt werden kann, dann ist sehr flexibel für unterschiedliche Anlagentypen eine solche hierarchische Anlagenstruktur zu erstellen. Diese hierarchische Anlagenstruktur wird dann auf die MES-Komponente (K; FIG 2) geladen, damit diese in Betrieb genommen werden kann.

Der in FIG 4 abstrakt skizzierte Algorithmus kann z.B. auf dem HAS-Builder (HAS-B; FIG 2) ausgeführt werden.

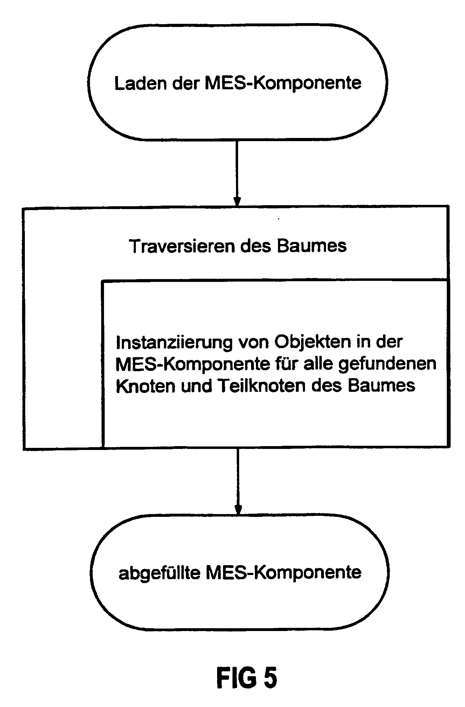

Die Darstellung gemäß FIG 5 zeigt in einem groben Ablaufdiagramm den Vorgang, wie eine MES-Komponente (K; FIG 2) geladen wird. Die hierarchische Anlagenstruktur (HAS; FIG 2) der Anlage liegt üblicherweise in einer Baumstruktur vor. Der Baum wird anhand eines Traveriserungsalgorithmus wie z.B. beschrieben in E. Denert, R. Frank, Datenstrukturen, BI-Wissenschaftsverlag, 1977. Wenn beim Traversieren des Baumes der Algorithmus auf einen Knoten oder Teilknoten stößt, wird in der MES-Komponente für alle diese gefundenen Knoten bzw. Teilknoten jeweils ein Objekt instanziiert. Wenn für alle Knoten und Teilknoten des Baumes in der MES-Komponente entsprechende Objekte instanziiert wurden, dann ist der Ladevorgang abgeschlossen und die abgefüllte MES-Komponente liegt vor. Eine solche abgefüllte MES-Komponente ist betriebsbereit.

Der in FIG 5 abstrakt skizzierte Algorithmus kann z.B. auf dem HAS-Builder (HAS-B; FIG 2) ausgeführt werden.

Aus Engineering- bzw. Anlagendokumenten (AD1, AD2; FIG 2) werden relevante Daten (RD1, RD2; FIG 2) extrahiert. Diese Daten werden anhand einer vorgegebenen Anlagenkennzeichnungsstruktur (AKZ; FIG 2) in eine hierarchische Anlagenstruktur (HAS; FIG 2) abgebildet. Diese hierarchische Anlagenstruktur wird auf die MES-Komponente (K; FIG 2) geladen, die somit betriebsbereit wird. Auch Verweise auf die ursprünglichen Engineering- bzw. Anlagendokumente (AD1, AD2; FIG 2) werden auf die MES-Komponente (K; FIG 2) geladen, damit wird innerhalb der MES-Komponente ein Navigieren in diesen Dokumenten ermöglicht.
Das erfindungsgemäße Verfahren und System sind insbesondere für solche MES-Komponenten oder Automatisierungskomponenten geeignet, die einen Überblick (bzw. Informationen) über andere Komponenten oder über die gesamte Struktur einer Anlage benötigen, z.B. das Dispatchingsystem.

Der erfindungsgemäße Gegenstand kann in der Fertigungs- und/oder der Produktions- und/oder der Prozessautomatisierung verwendet werden und kann prinzipiell auch für ERP-Komponenten und/oder Automatisierungskomponenten eingesetzt werden.

Das oben beschriebene erfindungsgemäße System bzw. Verfahren lässt sich als Computerprogramm in dafür bekannten Sprachen implementieren. Ein derartig implementiertes Computerprogramm kann in ebenfalls bekannter Weise über elektronische Datenwege, aber auch auf Datenträgern abgespeichert und transportiert werden.

## Patentansprüche

1. Verfahren zur automatischen Inbetriebsetzung von MES-Komponenten (K), insbesondere Maintenance Management Komponenten, **gekennzeichnet durch** die Abfolge folgender Schritte:
a) Extraktion von relevanten Daten aus Engineering-Dokumenten (AD1, AD2),
b) Zusammenfassung der relevanten Daten zu mindestens einem Dokument bzw. einer Datei (CRD),
c) Abbildung der Informationen dieser Dokumente bzw. Dateien auf Grundlage einer vorgebbaren Anlagenkennzeichnungsstruktur (AKZ) in eine hierarchische Anlagenstruktur (HAS),
d) Laden dieser hierarchischen Anlagenstuktur (HAS) in die jeweilige MES-Komponente (K).

2. Verfahren nach Anspruch 1,
**dadurch gekennzeichnet,**
**dass** Verweise auf die Engineering-Dokumente (AD1, AD2) und/oder Inhalte der Engineering-Dokumente mit in die hierarchische Anlagenstruktur (HAS) abgebildet werden und auf die MES-Komponente (K) geladen werden.

3. Verfahren nach Anspruch 1 oder 2,
**dadurch gekennzeichnet,**
**dass** die relevanten Daten (RD1, RD2) und/oder Teile der relevanten Daten auf Attribute der Objekte in der hierarchischen Anlagenstruktur (HAS) abgebildet werden.

4. Verfahren nach Anspruch 1, 2 oder 3,
**dadurch gekennzeichnet,**
**dass** die Vorschrift für die Abbildung der Informationen parametrierbar ist.

5. Datenverarbeitungseinrichtung (RE) zur Inbetriebsetzung von MES-Komponenten (K), insbesondere Maintenance Management Komponenten,
**dadurch gekennzeichnet,**
**dass** eine erste Einrichtung (E1, E2) aus vorgebbaren Engineering-Dokumenten (AD1, AD2) relevante Daten (RD1, RD2) extrahiert, eine zweite Einrichtung (HL) die relevanten Daten zusammenfasst und dass eine dritte Einrichtung (HAS-B) diese zusammengefassten Daten (CRD) auf Grundlage einer vorgebbaren Anlagenkennzeichnungsstruktur (AKZ) in eine hierarchische Anlagenstruktur (HAS) abbildet, wobei diese hierarchische Anlagenstruktur in die MES-Komponente (K) durch eine Ladeeinrichtung geladen wird.

6. Datenverarbeitungseinrichtung (RE) zur Inbetriebsetzung nach Anspruch 5,
**dadurch gekennzeichnet,**
**dass** durch die dritte Einrichtung (HAS-B) die Engineering-Dokumente (AD1, AD2) und/oder Verweise auf die Engineering-Dokumente (AD1, AD2) in die hierarchische Anlagenstruktur (HAS) abgebildet werden und in die MES-Komponente (K) geladen werden.

7. Datenverarbeitungseinrichtung (RE) zur Inbetriebsetzung nach Anspruch 5 oder 6,
**dadurch gekennzeichnet,**
**dass** durch die dritte Einrichtung (HAS-B) die relevanten Daten (RD1, RD2) und/oder Teile der relevanten Daten auf Attribute der Objekte in der hierarchischen Anlagenstruktur (HAS) abgebildet werden.

8. Datenverarbeitungseinrichtung (RE) zur Inbetriebsetzung nach einem der vorstehenden Ansprüche 5 bis 7,
**dadurch gekennzeichnet,**
**dass** eine vierte Einrichtung vorhanden ist, über die die Anlagenkennzeichnungsstruktur (AKZ) definiert wird und/oder die Abbildung von Teilen der relevanten Daten und/oder die Abbildung der relevanten Daten auf Attribute der Objekte in der hierarchischen Anlagenstruktur (HAS) definiert und vorgenommen wird.

9. Datenverarbeitungseinrichtung (RE) zur Inbetriebsetzung nach einem der vorstehenden Ansprüche 5 bis 8,
**dadurch gekennzeichnet,**
**dass** die Ladeeinrichtung in die dritte Einrichtung (HAS-B) integriert ist.

10. Datenverarbeitungseinrichtung (RE) zur Inbetriebsetzung nach einem der vorstehenden Ansprüche 5 bis 9,
**dadurch gekennzeichnet,**
**dass** die erste Einrichtung (E1, E2) und die zweite Einrichtung (HL) durch eine einzige Einrichtung realisiert sind.

11. Datenverarbeitungseinrichtung (RE) zur Inbetriebsetzung nach einem der vorstehenden Ansprüche 5 bis 10,
**dadurch gekennzeichnet,**
**dass** die erste Einrichtung (E1, E2), die zweite Einrichtung (HL) und die dritte Einrichtung (HAS-B) durch eine einzige Einrichtung realisiert sind.

12. Datenverarbeitungseinrichtung (RE) zur Inbetriebsetzung nach einem der vorstehenden Ansprüche 5 bis 11,
**dadurch gekennzeichnet,**
**dass** die dritte Einrichtung (HAS-B) in die zweite Einrichtung (HL) und/oder in die erste Einrichtung (E1, E2) integriert ist.

13. Datenverarbeitungseinrichtung (RE) zur Inbetriebsetzung nach einem der vorstehenden Ansprüche 5 bis 12,
**dadurch gekennzeichnet,**
**dass** die vierte Einrichtung in die dritte Einrichtung (HAS-B) integriert ist.

14. Datenverarbeitungseinrichtung (RE) zur Inbetriebsetzung nach einem der vorstehenden Ansprüche 5 bis 13,
**dadurch gekennzeichnet,**
**dass** die Abbildungsvorschrift für die Abbildung der relevanten Daten (RD1, RD2) und/oder die Abbildung von Teilen der relevanten Daten auf Attribute der Objekte der hierarchischen Anlagenstruktur (HAS) parametrierbar ist.

15. Computerprogramm, das ein Verfahren nach einem der Ansprüche 1 bis 4 implementiert.

16. Datenträger, auf dem ein Computerprogramm nach Anspruch 15 gespeichert ist.

## Revendications

1. Procédé pour la mise en service automatique de composants de système d'exécution de fabrication MES (K), notamment des composants de gestion de maintenance, **caractérisé par** la succession des étapes suivantes :
a) extraction de données pertinentes à partir de documents d'ingénierie (AD1, AD2),
b) regroupement des données pertinentes en au moins un document ou fichier (CRD),
c) projection des informations de ces documents ou fichiers sur la base d'une structure de caractérisation d'installation pouvant être prescrite (AKZ) dans une structure hiérarchique d'installation (HAS),
d) chargement de cette structure hiérarchique d'installation (HAS) dans les composants MES respectifs (K).

2. Procédé selon la revendication 1,
**caractérisé par le fait que** des renvois aux documents d'ingénierie (AD1, AD2) et/ou des contenus des documents d'ingénierie sont projetés en même temps dans la structure hiérarchique d'installation (HAS) et sont chargés sur les composants MES (K).

3. Procédé selon la revendication 1 ou 2,
**caractérisé par le fait que** les données pertinentes (RD1, RD2) et/ou des parties des données pertinentes sont projetées sur des attributs des objets dans la structure hiérarchique d'installation (HAS).

4. Procédé selon la revendication 1, 2 ou 3,
**caractérisé par le fait que** la règle pour la projection des informations est paramétrable.

5. Dispositif de traitement de données (RE) pour la mise en service de composants MES (K), notamment de composants de gestion de maintenance,
**caractérisé par le fait qu'**un premier dispositif (E1, E2) extrait des données pertinentes (RD1, RD2) à partir de documents d'ingénierie pouvant être prescrits (AD1, AD2), qu'un deuxième dispositif (HL) regroupe les données pertinentes et qu'un troisième dispositif (HAS-B) projette ces données regroupées (CRD) sur la base d'une structure de caractérisation d'installation pouvant être prescrite (AKZ) dans une structure hiérarchique d'installation (HAS), cette structure hiérarchique d'installation étant chargée dans les composants MES (K) par un dispositif de chargement.

6. Dispositif de traitement de données (RE) pour la mise en service selon la revendication 5,
**caractérisé par le fait que** le troisième dispositif (HAS-B) projette les documents d'ingénierie (AD1, AD2) et/ou des renvois aux documents d'ingénierie (AD1, AD2) dans la structure hiérarchique d'installation (HAS) et les charge dans les composants MES (K).

7. Dispositif de traitement de données (RE) pour la mise en service selon la revendication 5 ou 6,
**caractérisé par le fait que** le troisième dispositif (HAS-B) projette les données pertinentes (RD1, RD2) et/ou des parties des données pertinentes sur des attributs des objets dans la structure hiérarchique d'installation (HAS).

8. Dispositif de traitement de données (RE) pour la mise en service selon l'une des revendications précédentes 5 à 7,
**caractérisé par le fait qu'**il est prévu un quatrième dispositif par l'intermédiaire duquel la structure de caractérisation d'installation (AKZ) est définie et/ou la projection de parties des données pertinentes et/ou la projection des données pertinentes sur des attributs des objets dans la structure hiérarchique d'installation (HAS) sont définies et effectuées.

9. Dispositif de traitement de données (RE) pour la mise en service selon l'une des revendications précédentes 5 à 8,
**caractérisé par le fait que** le dispositif de chargement est intégré dans le troisième dispositif (HAS-B).

10. Dispositif de traitement de données (RE) pour la mise en service selon l'une des revendications précédentes 5 à 9,
**caractérisé par le fait que** le premier dispositif (E1, E2) et le deuxième dispositif (HL) sont réalisés par un seul dispositif.

11. Dispositif de traitement de données (RE) pour la mise en service selon l'une des revendications précédentes 5 à 10,
**caractérisé par le fait que** le premier dispositif (E1, E2), le deuxième dispositif (HL) et le troisième dispositif (HAS-B) sont réalisés par un seul dispositif.

12. Dispositif de traitement de données (RE) pour la mise en service selon l'une des revendications précédentes 5 à 11,
**caractérisé par le fait que** le troisième dispositif (HAS-B) est intégré dans le deuxième dispositif (HL) et/ou dans le premier dispositif (E1, E2).

13. Dispositif de traitement de données (RE) pour la mise en service selon l'une des revendications précédentes 5 à 12,
**caractérisé par le fait que** le quatrième dispositif est intégré dans le troisième dispositif (HAS-B).

14. Dispositif de traitement de données (RE) pour la mise en service selon l'une des revendications précédentes 5 à 13,
**caractérisé par le fait que** la règle de projection pour la projection des données pertinentes (RD1, RD2) et/ou pour la projection de parties des données pertinentes sur des attributs des objets de la structure hiérarchique d'installation (HAS) est paramétrable.

15. Programme informatique qui met en oeuvre un procédé selon l'une des revendications 1 à 4.

16. Support de données sur lequel un programme informatique selon la revendication 15 est mémorisé.

## Claims

1. Method for automatically commissioning MES components (K), particularly maintenance management components, **characterized by** the sequence of the following steps:
a) relevant data are extracted from engineering documents (AD1, AD2),
b) the relevant data are combined to form at least one document or one file (CRD),
c) the information in these documents or files is mapped into a hierarchic installation structure (HAS) on the basis of a prescribable installation identification structure (AKZ),
d) this hierarchic installation structure (HAS) is loaded into the respective MES component (K).

2. Method according to Claim 1,
**characterized**
**in that** references to the engineering documents (AD1, AD2) and/or contents of the engineering documents are also mapped into the hierarchic installation structure (HAS) and are loaded onto the MES component (K).

3. Method according to Claim 1 or 2,
**characterized**
**in that** the relevant data (RD1, RD2) and/or parts of the relevant data are mapped onto attributes of the objects in the hierarchic installation structure (HAS).

4. Method according to Claim 1, 2 or 3,
**characterized**
**in that** the specification for mapping the information is parameterizable.

5. Data processing device (RE) for commissioning MES components (K), particularly maintenance management components,
**characterized**
**in that** a first device (E1, E2) extracts relevant data (RD1, RD2) from prescribable engineering documents (AD1, AD2), a second device (HL) combines the relevant data, and in that a third device (HAS-B) maps these combined data (CRD) into a hierarchic installation structure (HAS) on the basis of a prescribable installation identification structure (AKZ), with this hierarchic installation structure being loaded into the MES component (K) by a loading device.

6. Commissioning data processing device (RE) according to Claim 5,
**characterized**
**in that** the third device (HAS-B) maps the engineering documents (AD1, AD2) and/or references to the engineering documents (AD1, AD2) into the hierarchic installation structure (HAS) and loads them into the MES component (K).

7. Commissioning data processing device (RE) according to Claim 5 or 6,
**characterized**
**in that** the third device (HAS-B) maps the relevant data (RD1, RD2) and/or parts of the relevant data onto attributes of the objects in the hierarchic installation structure (HAS).

8. Commissioning data processing device (RE) according to one of the preceding Claims 5 to 7,
**characterized**
**in that** a fourth device is provided which is used to define the installation identification structure (AKZ) and/or to define and carry out the mapping of parts of the relevant data and/or the mapping of the relevant data onto attributes of the objects in the hierarchic installation structure (HAS).

9. Commissioning data processing device (RE) according to one of the preceding Claims 5 to 8,
**characterized**
**in that** the loading device is integrated in the third device (HAS-B).

10. Commissioning data processing device (RE) according to one of the preceding Claims 5 to 9,
**characterized**
**in that** the first device (E1, E2) and the second device (HL) are provided by a single device.

11. Commissioning data processing device (RE) according to one of the preceding Claims 5 to 10,
**characterized**
**in that** the first device (E1, E2), the second device (HL) and the third device (HAS-B) are provided by a single device.

12. Commissioning data processing device (RE) according to one of the preceding Claims 5 to 11,
**characterized**
**in that** the third device (HAS-B) is integrated in the second device (HL) and/or in the first device (E1, E2).

13. Commissioning data processing device (RE) according to one of the preceding Claims 5 to 12,
**characterized**
**in that** the fourth device is integrated in the third device (HAS-B).

14. Commissioning data processing device (RE) according to one of the preceding Claims 5 to 13,
**characterized**
**in that** the mapping specification for mapping the relevant data (RD1, RD2) and/or mapping parts of the relevant data onto attributes of the objects in the hierarchic installation structure (HAS) is parameterizable.

15. Computer program which implements a method according to one of Claims 1 to 4.

16. Data storage medium on which a computer program as according to Claim 15 is stored.
